Europäisches Patentamt

European Patent Office

Office européen des brevets

(11) Publication number: **0 151 093**
A2

(12) **EUROPEAN PATENT APPLICATION**

(21) Application number: **85830013.0**

(22) Date of filing: **22.01.85**

(51) Int. Cl.⁴: **B 60 C 19/12**, B 60 C 5/04

(30) Priority: **02.02.84 IT 1939884**

(43) Date of publication of application: **07.08.85**
**Bulletin 85/32**

(84) Designated Contracting States: **AT BE CH DE FR GB LI LU NL SE**

(71) Applicant: **D'Alessandro, Ileana, Via Mac Mahon 119, I-20155 Milano (IT)**

(72) Inventor: **D'Alessandro, Ileana, Via Mac Mahon 119, I-20155 Milano (IT)**

(74) Representative: **Calvani, Domenico, UFFICIO BREVETTI ING. CALVANI, SALVI & VERONELLI 4, Piazza Duca d'Aosta, I-20124 Milan (IT)**

(54) An unpierceable air tube, particularly for bicycles, motorbicycles and motorcycles.

(57) An air tube is disclosed wherein the structure of the air tube is such that upon inflating the air tube, supply sources of air under pressure are caused to form between the outer surface of the air tube and the inner surface of an associated cover. These supplies of air under pressure are designed to act so that when a sharp pointed object such as, for example, a nail pierces through the cover and causes the inflated air tube to slightly move aside so as to separate it from the cover, the air aupplies are sucked into this separation area to create a deep air pocket therein which permits the air tube to be maintained spaced apart from the point of the nail having passes through the cover.

Also disclosed is a mix from which the air tube is obtainable, the mix having a particular composition which is such as to give the air tube the required elastic and strength properties.

## AN UNPIERCEABLE AIR TUBE, PARTICULARLY FOR BICYCLES, MOTORBICYCLES AND MOTORCYCLES

This invention relates to tire air tubes for vehicles in general but particularly for bicycles, motorized bicycles and motorcycles, and more particularly to an air tube of a novel design which is characterized in that it is of a substantially unpierceable construction.

As known, an air tube is a tore-shaped, thin walled rubber tube having a very good airtight property, which is inflated to a desired pressure by introducing air into it through a valve means. The surface of said rubber tube is usually smooth in order to be able to make a close contact with the inner surface of a cover forming a strong casing for the air tube.

A most serious disadvantage of presently used air tubes is their liability to puncturing. In fact, if a sharp pointed object such as, foe example, a nail pierces through an air tube cover to come into contact with the inflated air tube, this air tube will first be moved apart from the inner surface of its associated cover and then, upon an elastic limit being exceeded, it is punctured as a result of which it becomes deflated.

It is an object of this invention to overcome the above disadvantage by providing an air tube which is of a substantially unpierceable nature at least against the most usual sharp pointed objects that are likely to exert such a piercing effect thereupon.

More particularly, the invention provides a tire air tube for vehicles, especially of the bicycle, motor-bicycle and motorcycle type, characterized by a structure which is designed so that, when under inflated condition, it provides for supply sources of air under pressure to be available between the outer surface of the air tube and the inner surface of an associated cover, said supplies of air under pressure being such that, when a puncturing object having penetrated through the cover causes the air tube to be slightly moved away and, thus, separated from said cover, the air supplies are sucked into this separation area to form an air pocket therein which will maintain the air.tube spaced apart from the point of the piercing object that has penetrated the cover thereby to prevent the air tube from being punctured.

Said supply sources of air under pressure are preferably created at least at that region of the air tube which corresponds to a tire tread region.

According to a feature of this invention, said pressurized air supplies are obtained in that the structure of the air tube wall is corrugated in a circumferential direction thereof so that the air tube will show longitudinal crests and grooves extending parallel to one another throughout the length of the torus formed by the air tube, the air enclosed in each of such grooves being caused to be compressed when inflating the air tube.

According to another feature of the invention, said pressurized air supplies are obtained by the structure of the air tube wall being corrugated in a longitudinal direction so that the air tube will show circumferential crests and grooves formed thereon extending parallel to one another along the air tube, the air in each of such grooves being caused to be compressed when inflating the air tube.

A further feature of the invention resides in the critical composition of the mix employed for producing the above described air tube with the required elastic and strength properties.

One preferred composition for said mix is as follows:

| White rubber, | % | 90.5 |
| Active zinc oxide, | % | 1.8 |
| Sulfur, | % | 2.3 |
| D.M. accelerator, | % | 0.8 |
| D accelerator, | % | 0.1 |
| Yellow ozocerite, | % | 3.0 |
| Stearin, | % | 1.0 |
| Antioxidant aldol, | % | 0.5 |

The invention will now be described in more details with reference to the accompanying drawings which show, by way of non-restrictive examples, some preferred embodiments thereof, and in which:

- Figure 1 is a perspective view of a portion of air tube according to a first embodiment of the invention;

- Figure 2 is a view similar to figure 1 showing a portion

- 3 -

of air tube according to another embodiment of the invention;

- Figure 3 is a partial cross-sectional view through an inflated air tube mounted in an associated cover; and

- Figure 4 is a partial cross-sectional view similar to figure 3, showing the behaviour of the air tube upon a nail having passed through the cover.

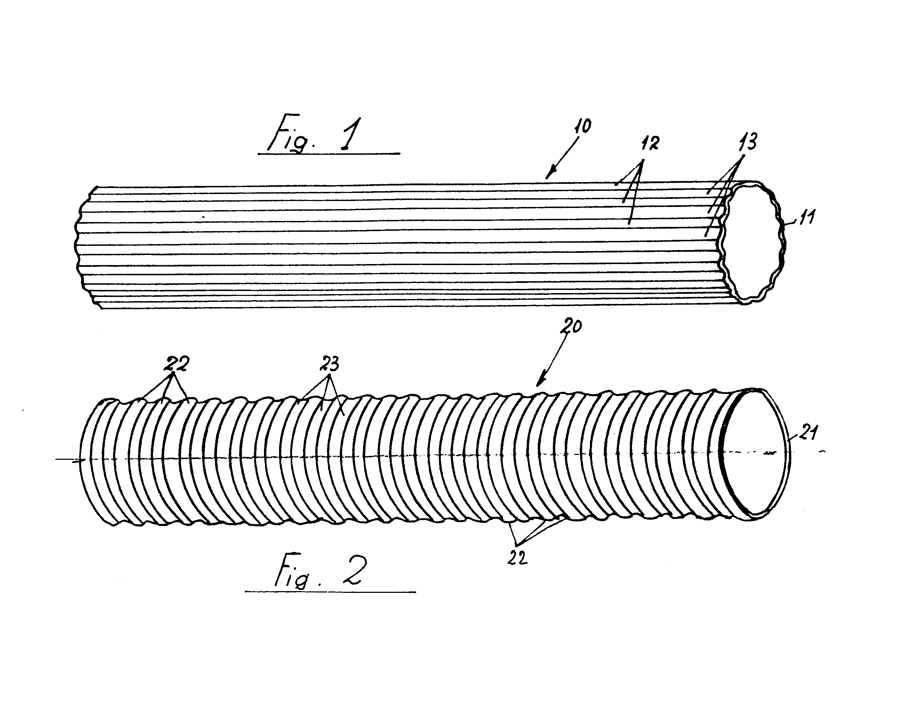

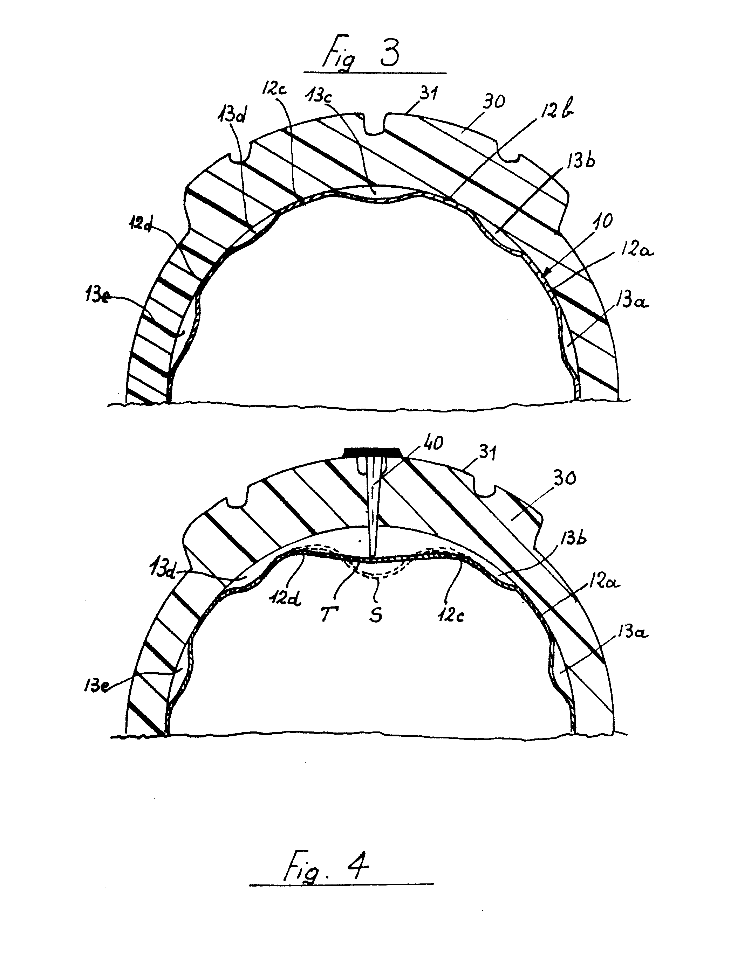

With reference first to figure 1, there is generally indicated with 10 a portion of an air tube according to this invention. This air tube portion 10 has a thin wall 11 having a structure that is of corrugated cross-sectional shape, said structure forming crests 12 and grooves 13 parallel to one another extending in a direction longitudinal of the air tube along the length of the tore-shape thereof. The grooves 13 are designed so that, when the air tube is inflated in an associated cover, these grooves cause compressed air supplies to be formed between the upper surface of the air tube and the lower surface of the cover for a purpose to be explained herein below in relation to figures 3 and 4.

In figure 2 there is generally shown at 20 an air tube portion having a thin wall 21 the longitudinal cross-section of which has a corrugated structure forming crests 22 and grooves 23 extending in a direction circumferential of the air tube throughout the length thereof. The grooves 23 are designed so that, when the air tube is inflated inside the associated cover, the grooves cause compressed air supplies to be formed between the upper surface of the air tube and the lower surface of the cover.

Figure 3 is a cross-sectional view taken through a cover 30 and the associated inflated air tube 10. When inflating the air tube inside the cover 30, the air in grooves 13a, 13b, 13c, 13d and 13e is compressed so as to form supply sources of air under pressure therein, while the crests 12a, 12b, 12c and 12d, that are in close contact with the cover, define said grooves laterally.

Figures 4 is a cross-sectional view similar to Figure 3 but showing the behaviour of the air tube 10 in the case when a nail 40 punctures the cover 30. In this case, when the point of the nail 40 comes into contact with the air tube it firstly exerts a pushing action thereupon causing the air tube to move away at that location from its cover 30 so that the grooves 13c, in the example shown, will communicate laterally, at that region, with one or each of the two adjacent grooves such as, for example, the grooves 13b and 13d. Then, air under pressure contained in groove 13c and the, or each adjacent grooves 13b and/or 13d will flow with force into the thus formed pocket T and this will deform by pressure balance into a deeper pocket S. In this deeper pocket S the point of the nail will no longer touch the air tube so that puncturing of this latter is prevented.

Though the exact mechanism of this phenomenon is not perfectly known, it has been surprisingly found by experiments that said deep air pocket is really formed and it seems to the Applicant that what has been stated above may be considered as the most obvious explanation of the described phenomenon.

As an aid in achieving the novel air tube structure of the invention, there has also been developed
according to the invention a preferred mix composition
for manufacturing the novel air tube, which composition
gives the air tube the required elastic and strength
properties and allows for the above described phenomenon to take place.

Among the many types of mix that have been tested, it has been found that for the most successful
results to be attained, a mix having the following
composition should be employed:

| White rubber, | % | 90.5 |
| Active zinc oxide, | % | 1.8 |
| Sulphur, | % | 2.3 |
| D.M.accelerator, | % | 0.8 |
| D Accelerator, | % | 0.1 |
| Yellow ozocerite, | % | 3.0 |
| Stearin, | % | 1.0 |
| Antioxidant aldol, | % | 0.5 |

The air tube of the invention is formed by curing
it in a conventional manner on aluminium pipe - or rod
shaped supporting means the outer surface of which has
the same shape as that of the air tube structure to be
obtained, by employing processes that are known in the
art, the cured air tube being then removed from the pipe
or rod shaped supporting means and treated in a usual
manner until the two ends thereof are joined together
to give the air tube its final tore-shape.

It has been found through experiments that the
air tube of the invention is unpierceable by nails up

- 6 -

to 1.5 to 2 cm in length which largely fall within the class of these sharp pointed objects by which commercially available types of air tubes are likely to be punctured.

While one preferred embodiment of the invention, and one modification thereof, have been disclosed above and illustrated in the accompanying drawings, it has to be intended that the teachings of the invention would also be applied to other types of air tube without departing from the spirit and scope of the inventive principle which essentially resides in causing supply sources of air under pressure to be created with the purpose of compensating for the lower pressure that is produced at a puncturing area, namely an area where a separation of the air tube from an associated cover has occurred as a result of a sharp pointed object having pierced through the cover to be brought into contact with the air tube.

C L A I M S

1. Unpierceable air tube, particularly for bicycles, motorbicycles and motorcycles, characterized in that the air tube has a structure which is such that upon inflating the air tube supply sources of air under pressure are formed between the outer surface of the air tube and the inner surface of an associated cover in such a way that, when a sharp pointed object pierces through the air tube cover and causes the air tube to slightly separate from its cover, said compressed air supplies are sucked into the separation area to form a deep air pocket therein which will maintain the air tube spaced apart from the point of the piercing object that has penetrated the cover so as to prevent the air tube from being punctured by it.

2. Unpierceable air tube according to claim 1, characterized in that said air supplies are formed at least at that region of the air tube which corresponds to an associated tread.

3. Unpierceable air tube as claimed in claim 1, characterized in that said air supplies are obtained in that the structure of the air tube wall is corrugated in a circumferential direction thereof so that the air tube shows longitudinal crests and grooves extending parallel to each other all along of the torus formed by the air tube, the air in each of said grooves being caused to become compressed when inflating the air tube.

- 1 -

4. Unpierceable air tube according to claim 1, characterized in that said air supplies are obtained by
the structure of the air tube wall being corrugated in a
longitudinal direction thereof so that the air tube shows
circumferential crests and grooves that extend parallel
to one another along the length of the air tube, the air
in each of said grooves being caused to become compressed upon inflating the air tube.

5. Unpierceable air tube according to any preceding
claim, characterized in that the air tube is manufactured
from a mix having a composition as follows:

| | | |
|---|---|---|
| White rubber, | % | 90.5 |
| Active zinc oxide, | % | 1.8 |
| Sulphur, | % | 2.3 |
| D.M.Accelerator, | % | 0.8 |
| D Accelerator, | % | 0.1 |
| Yellow ozocerite, | % | 3.0 |
| Stearin, | % | 1.0 |
| Antioxidant aldol, | % | 0.5 |

6. Air tube and cover assembly particularly suitable
as a tubular tire for bicycles, motorized bicycles and
similar vehicles, that is to say a tire for road vehicles
in general, characterized in that said air tube has an
appropriate structure which is such that, in cooperation
with the internal surface of an associated cover, it
forms supply sources of air under pressure in a manner
as set forth and claimed above with reference to the
accompanying drawings for the purposes as stated herein-
before.

- 2 -

7. Unpierceable air tube as claimed in any preceding claim, characterized in that said air tube is formed by curing it on metal supporting pipes whose outer surface has the same configuration as that of the claimed air tube structure.

Fig. 1

Fig. 2

1/2

0151093

Fig. 3

Fig. 4